# EUROPEAN PATENT SPECIFICATION

(11) **EP 3 291 153 B1**
(45) Date of publication and mention of the grant of the patent: **02.12.2026**
(21) Application number: 16786552.6
(22) Date of filing: 28.04.2016
(51) Int. Cl.: G06Q 10/08, B65G 1/137, G06K 17/00

(54) **STORAGE CABINET**
LAGERSCHRANK
ARMOIRE DE STOCKAGE

(30) Priority: 28.04.2015 JP 2015091123
(43) Date of publication of application: 07.03.2018
(73) Proprietor: SATO Corporation, Tokyo 108-0023 (JP)
(72) Inventor: UNO, Yoshiaki, Singapore 408723 (SG); KASDANI, Yusita, Singapore 408723 (SG)
(74) Representative: Grünecker Patent- und Rechtsanwälte PartG mbB
(86) International application number: PCT/JP2016/063334
(87) International publication number: WO 2016/175276

(56) References cited:
- WO-A1-2006/093701
- JP-A- 2002 119 577
- JP-A- 2005 082 381
- JP-A- H10 316 210
- US-A1- 2007 150 381
- US-A1- 2014 138 440

## Description

### TECHNICAL FIELD

The present invention relates to a storage cabinet that stores contents (items) such as products and goods.

### BACKGROUND ART

A storage cabinet is known that manages contents (items) by using radio frequency identification (RFID) technology. The patent literature 1 for example describes that a radio frequency detector is attached to a food as an example of each of a single or a plurality of contents (items). The patent literature 1 describes that a storage cabinet instructs the detector to judge whether a condition value indicative of a condition of a food is above or below a threshold, and that the storage cabinet includes: a reader receiving the judgement result of the detector; and a determiner determining respective conditions of the single or the plurality of foods with reference to the judgement result received by the reader. Further, the patent literature 1 also describes that the reader may be an RFID reader receiving a signal from an RFID tag.

Meanwhile, a goods management system suggested in the patent literature 2 compares, information indicating a date of storing (or an expiration date for use) read from a RFID tag with regard to goods (item) that is recognized to have been retrieved from a storage cabinet, and information recorded in goods management information recording means and indicating respective dates of storing (or respective expiration dates for use) with regard to goods in the storage cabinet. The goods management system then notifies a person who has retrieved the goods from the storage cabinet, when a first-in-first-out method for the goods with respect to the storage cabinet is not followed. Further, the system compares the expiration date for use read from a RFID tag with regard to goods (item) that is recognized to have been retrieved from a storage cabinet, and a date managed by a computer (that is, a present date). The system then notifies a person who has retrieved the goods from the storage cabinet, when the system judges that the goods which have been retrieved from the storage cabinet is expired. The patent literature 2 explains that "the first-in-first-out method" means in a narrow sense "a system in which goods that have been stored earlier is retrieved earlier."
Document US 2014/138440 A1 discloses a storage cabinet according to the preamble of claim 1.

### Citation List

### Patent Literature

Patent literature 1: Japanese laid-open patent publication 2014-037894
Patent literature 2: Japanese laid-open patent publication 2005-82381

### SUMMARY OF THE INVENTION

### Problems to be Solved by the Invention

The storage cabinet suggested in the patent literature 1 merely transmits expired goods to the external device.

The goods management system suggested in the patent literature 2 judges whether the first-in-first-out method is followed and whether goods are expired, after the goods as an item have been retrieved from the storage cabinet. However, there is a case in which goods may be expired before retrieved, and the patent literature 2 is silent in processing for that case.

In a case in which goods are expired before retrieved, a user may be requested to select one of: retrieval of expired goods to remove it from the storage cabinet; and retrieval of unexpired goods to immediately use it. In such case, it is demanded that the storage cabinet not be misused in accordance with intention of a user.

In view of the above, one of the aspects of the present invention is to provide a storage cabinet that is capable of preventing misuse by a user.

### Means for Solving the Problems

The aforementioned object is achieved by a storage cabinet according to claim 1. The first embodiment of the present invention is a storage cabinet for storing a plurality of items, each item including a first tag attached thereto, the first tag being an RF tag for recording item information relating to a corresponding item, the item information including at least an item code identifying an item and information of an expiration date of the item, the storage cabinet including:
a housing for storing the plurality of items;
a door connected to the housing, the door being in an open state in which the plurality of items is accessible from the outside, or in a closed state in which the plurality of items is inaccessible from the outside;
a first reader configured to read item information recorded in the first tag of all items stored in the housing, when the door is in the closed state;
a judgment part configured to judge whether an expired item exists in the housing, based on a reading result of the first reader;
a first controller configured to control item retrieval from the housing in a first mode, if the judgment part judges that an expired item does not exist in the housing, the first mode being a mode in which retrieval of an item other than an item having a period of time to an expiration date which is the shortest among items of the identical item code, is restricted; and
a second controller configured to control item retrieval from the housing in a mode selected from the first mode and a second mode based on an operation of a user, if the judgment part judges that an expired item exist in the housing, the second mode being a mode in which retrieval of an item other than an expired item is restricted.

The storage cabinet according to the second embodiment of the present invention further includes a second reader configured to read information recorded in a second tag, when the door is in the closed state and the second tag is made proximate from the outside to a predetermined area on the housing, the information recorded in the second tag including user identification information identifying a user,
wherein, when the second reader reads the user identification information after the judgment part has judged that an expired item exists in the housing, the second controller is configured to select the second mode.

The storage cabinet according to the third embodiment of the present invention may further include:
a door locking part configured to lock or unlock the door, and
a third controller configured to control the door locking part so as to unlock the door when authentication of the user identification information read by the second reader is successful.

The storage cabinet according to the fourth embodiment of the present invention may further include a first alarm part configured to output at least one of a vocal alarm and a displayed alarm, if the second controller judges:
that the first mode is selected, and an item other than an item having a period of time to an expiration date which is the shortest among items of the identical item code, has been retrieved from the storage cabinet; or
that the second mode is selected, and an item other than an expired item has been retrieved from the storage cabinet.

In the storage cabinet according to the fifth embodiment of the present invention, a transmitter configured to transmit an email to a predetermined address, if the item judged to have been retrieved from the storage cabinet is not returned to the storage cabinet.

The storage cabinet according to the sixth embodiment of the present invention may further include a second alarm part configured to output at least one of a vocal alarm and a displayed alarm, when an item, a remaining period of time to an expiration date of which reaches a preset period of time, exists among the items stored in the storage cabinet.

In the storage cabinet according to the seventh embodiment of the present invention, the expiration date of an item may be an expiration date of the item itself or a preset period of time before an expiration date of the item itself.

In the storage cabinet according to the eighth embodiment of the present invention, the expiration date of an item may be a reference time.

### Effects of the Invention

A storage cabinet according to the present disclosure serves to prevent misuse by a user.

### BRIEF DESCRIPTION OF THE DRAWINGS

FIG. 1 shows a perspective view of a storage cabinet according to an embodiment when a door is in a closed state;
FIG. 2 shows a perspective view of the storage cabinet according to the embodiment when a door is in an open state;
FIG. 3 shows examples of a rack in the storage cabinet according to the embodiment and items in the rack;
FIG. 4 shows a user card used for an item storage system according to the embodiment;
FIG. 5 shows a picking list card used for the item storage system according to the embodiment;
FIG. 6 shows a method for using the user card or the picking list card by a user in the item storage system according to the embodiment;
FIG. 7 shows a method for scanning an item by a user in the item storage system according to the embodiment;
FIG. 8 is a block diagram of an internal configuration of the storage cabinet according to the embodiment;
FIG. 9 shows an example of data configuration of a registered user database;
FIG. 10 shows an example of data configuration of an inventory database;
FIG. 11 shows an example of data configuration of a transaction log database;
FIG. 12 shows a flowchart of activation processing of the storage cabinet according to the embodiment;
FIG. 13 shows a flowchart of access antenna reception processing of the storage cabinet according to the embodiment;
FIG. 14 shows a flowchart of user access processing of the storage cabinet according to the embodiment;
FIG. 15 shows a flowchart of transaction processing of the storage cabinet according to the embodiment;
FIG. 16 shows a flowchart of pick scanning processing of the storage cabinet according to the embodiment;
FIG. 17 shows a flowchart of picking list processing of the storage cabinet according to the embodiment;
FIG. 18 shows a displayed example of the storage cabinet according to the embodiment;
FIG. 19 shows a displayed example of the storage cabinet according to the embodiment;
FIG. 20 shows a displayed example of the storage cabinet according to the embodiment; and
FIG. 21 is a flowchart of a method for managing an expiration date of an item in the storage cabinet according to the embodiment.

### DETAILED DESCRIPTION OF THE INVENTION

An embodiment of the present invention will be described in detail below with reference to drawings. Note that an identical sign is basically attached to the identical elements in the drawings for explaining the embodiment to avoid repeated explanation to those identical elements.

In the embodiment of the present invention, each of the first controller, the second controller, and the third controller of the present invention may be implemented with a single device or with a plurality of devices. Each of the first reader and the second reader of the present invention may be implemented with a single device or with a plurality of devices. Each of the first alarm part and the second alarm part of the present invention may be implemented with a single device or with a plurality of devices.

### (1) Item storage system

An item storage system according to the present embodiment will be described below.

The item storage system according to the present embodiment applies: a storage cabinet for storing item(s); an item to be stored including a label attached thereto; and cards (namely, a user card UC and a picking list card PC). An RF tag is embedded in the label and each card, and an antenna radiating an electric wave to the RF tag is installed in a storage cabinet 1. The antenna and the RF tag are communicated wirelessly by use of radio frequency identification (RFID) technology. Any wireless communication type may be applied; however, a passive type RFID of phase jitter modulation (PJM) may be preferably applied in order to allow for recognition of a large amount of data with high speed.

In the following description, "an item" may be any tangible entity to be stored in a storage cabinet. For example, an item may be goods, a product, a half-finished product (that is, a product that is still being manufactured and is not a final product), or a tangible entity possessed by a person or a corporation.

In the following description, "a transaction" may be referred to as a single operation with regard to a storage cabinet by a user. For example, a transaction may be an operation of storing an item into and/or retrieval of an item from the storage cabinet, during a period of time beginning at a time when a user changes the state of the storage cabinet from a closed state to an open state and ending at a time when the use changes the state of the storage cabinet again to the closed state. An operation of that same user after changing the state of the storage cabinet again to the open state is considered as a new transaction.

### (1-1) Configuration of Storage cabinet

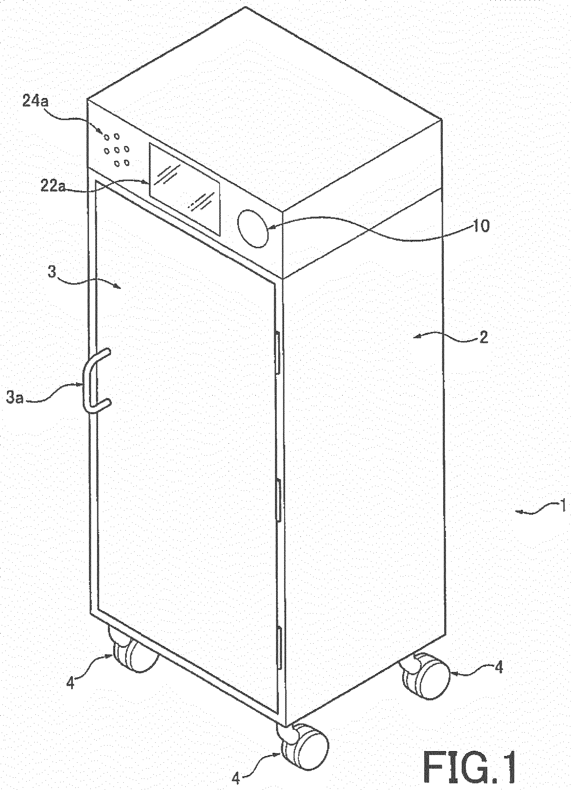

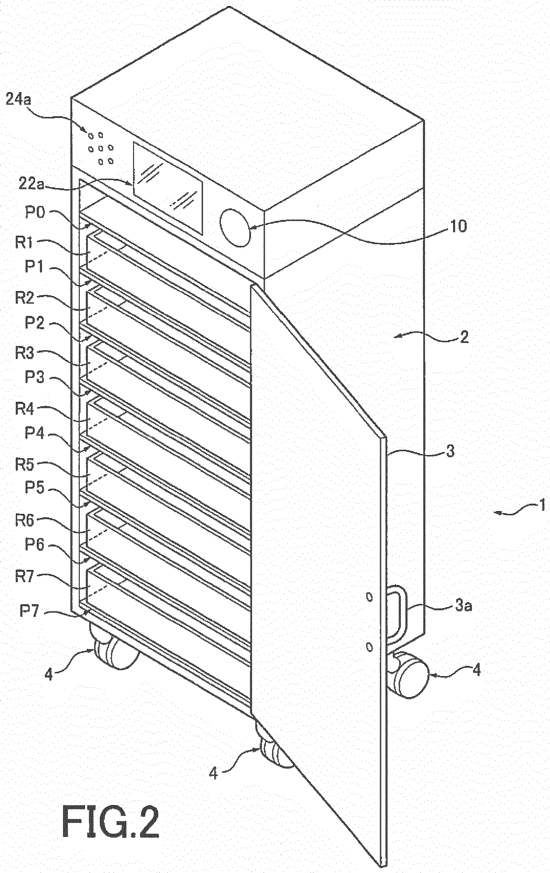

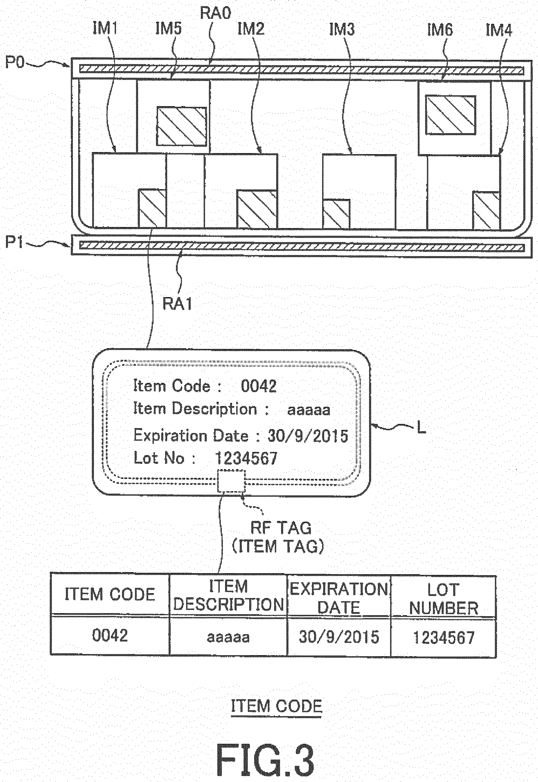

Firstly, a storage cabinet **1** according to the present embodiment will be described with reference to FIGS. 1 to 3. FIG. 1 shows a perspective view of a storage cabinet **1** according to the present embodiment when a door is in a closed state. FIG. 2 shows a perspective view of the storage cabinet **1** according to the present embodiment when a door is in an open state. FIG. 3 shows examples of a rack in the storage cabinet **1** according to the present embodiment and items in the rack.

As illustrated in FIGS. 1 and 2, the storage cabinet **1** includes a housing **2** so as to store a plurality of items inside. The housing **2** is basically cuboid-shaped. In FIGS. 1 and 2, wheels **4** are preferably attached at the bottom of the housing **2** so that the storage cabinet **1** is mobile; however, wheels **4** may not be provided.

The storage cabinet **1** according to the present embodiment includes a door **3** attached thereto. The door **3** is attached to the housing **2.** The door 3 includes a door handle **3a** attached thereto. FIG. 1 represents the door **3** in a closed state of the storage cabinet **1,** to which a plurality of items inside is inaccessible from the outside. FIG. 2 represents the door **3** in an open state of the storage cabinet **1,** to which a plurality of items inside is accessible from the outside. The door **3** is locked during a period of time in which there is no access to the storage cabinet **1** from a user. The door **3** is unlocked when there is an access to the storage cabinet **1** from an authorized user.

In the storage cabinet **1** according to the present embodiment, a display panel **22a,** a speaker **24a,** and an access antenna part **10** are disposed above the door **3.**

The access antenna part **10** is a part of the front face of the housing **2,** which is provided at a location on the front face of the housing **2** where an access antenna **AA** (not illustrated) is mounted inside of the housing **2.** The location where the access antenna part **10** is provided is an example of a predetermined area on the housing **2.**

The display panel **22a** and the speaker **24a** are disposed at the same height as a head of a user who may stand facing the door **3** so that visibility of the display panel **22a** and clarity of voices from the speaker **24a** are good.

As will be described later, in order for a user to retrieve an item from the storage cabinet **1** or to store an item into the storage cabinet **1,** the user is required to be authorized by making a user card proximate to the access antenna part **10** (that is, by holding the user card over the access antenna part **10**). At this time, since the access antenna part **10** is disposed at the same height as a head of a user who may stand facing the door **3,** operability with regard to the user card is good.

In the storage cabinet **1** according to the present embodiment, the display panel **22a** and the access antenna part **10** are disposed close to each other. Thus, in a case in which a user holds a card or an item over the access antenna part **10,** amount of a change in a line of sight of the user is small when the user looks at a processing result displayed on the display panel **22a,** and thus operability is good.

As illustrated in FIG. 2, a plurality of racks **R1** to **R7** (seven racks in an example of FIG. 2), which is collectively referred to as "racks R", is accumulated. Each rack is sectioned by partition plates provided at the upper and the lower sides. For example, a rack **R1** is disposed between a partition plate **P0** and a partition plate **P1,** while a rack **R2** is disposed between the partition plate **P1** and a partition plate **P2.** Each partition plate includes a rack antenna inside. That is, partition plates **P0** to **P7** includes rack antennas **RA0** to **RA7** inside respectively.

Note that each rack may not be made of metal but preferably made of plastic for example so that reception performance of the rack antennas **RA0** to **RA7** is not deteriorated.

A cosmetic portion of the housing **2** defining appearance thereof may be preferably made of metal including an electromagnetic shielding function so that electromagnetic waves radiating from the outside do not influence on reception performance of the rack antennas. For example, such function prevents each of the rack antennas from inadvertently detecting an RF tag that is irrelevant to the storage cabinet **1** and may be proximate to or come into contact with the housing **2** from the outside of the storage cabinet **1.**

Items of a variety of kinds may be stored in each rack. FIG. 3 illustrates an example of the rack **R1** in which items **IM1** to **IM6** are stored. A label **L** is attached to each item. The label **L** (hereinafter referred to as "item tag") includes an RF tag embedded therein. Data for identifying an item is recorded in the RF tag. The item tag is an example of a first tag. Printed on a front face of each label L are: an item code, an item description, an expiration date, and a lot number of an item to which a label is attached. At least one of an item code, an item description, an expiration date, and a lot number of an item is an example of item information.

An adhesive layer is formed on a back face of each label **L.** Each label **L** is attached to a corresponding item via the adhesive layer. The label L may be produced by a printer. The printer prints information on the front face of the label **L** and writes data in the item tag of the label **L.** Note that information of an item code, an item description, an expiration date, and a lot number of an item may not be printed on each label **L,** and that information may not be printed at all on each label **L.**

Recorded in item tag embedded in each label are data (hereinafter referred to as "item data") of fields of an item code, an item description, an expiration date, and a lot number of an item, which are printed on the front face of each label **L.**

As described above, each partition plate includes the rack antenna transmitting radio wave to the item tag. In an example of FIG. 3, the rack antennas **RA0**, **RA1** respectively included in the partition plates **P0, P1** transmit radio waves to the item tag of all items stored in the rack **R1** and receive radio waves (reflected waves) from the item tags. The radio waves from the item tags contain item data recorded in the item tag. As illustrated in FIG. 3, the item tags of the items in the rack **R1** are communicated with the two rack antennas **RA0**, **RA1** included respectively in the two partition plates **P0**, **P1** that are provided at the upper and lower sides of the rack **R1,** since the item tags of the items in the rack **R1** may be placed at any position.

The same applies to the other racks. For example, the rack antennas **RA1, RA2** transmit radio waves from and receive radio waves to item tag(s) of item(s) in the rack **R2,** and the rack antennas **RA2, RA3** transmit radio waves from and receive radio waves to item tag(s) of item(s) in the rack **R3.**

### (1-2) Configuration of cards and Method of using cards

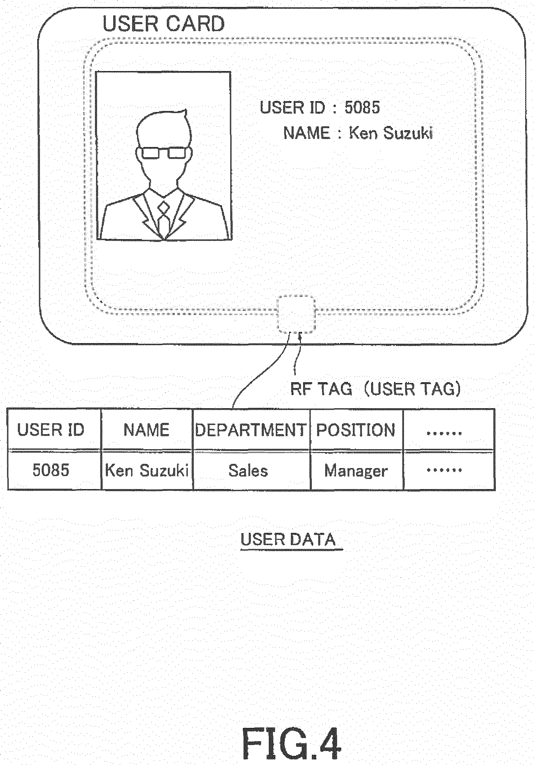

Next, configuration of cards and method of using the cards in the item storage system according to the present embodiment will be described with reference to FIGS. 4 to 6.

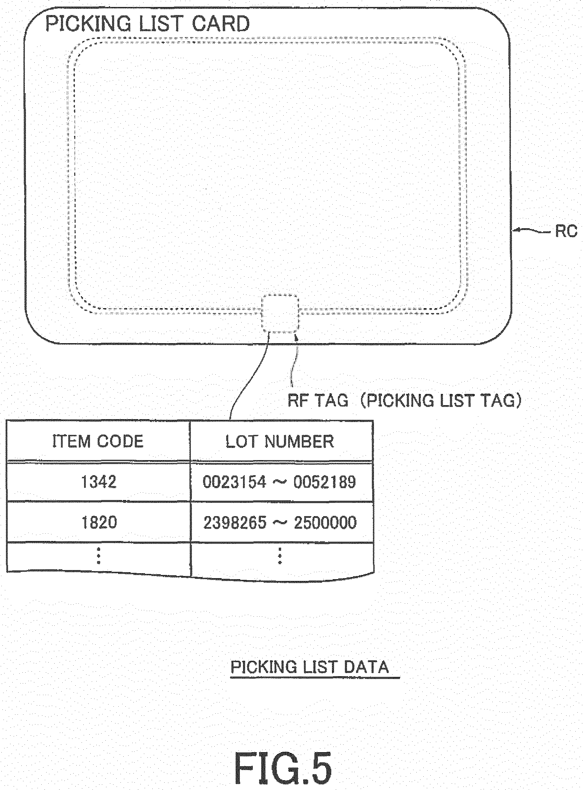

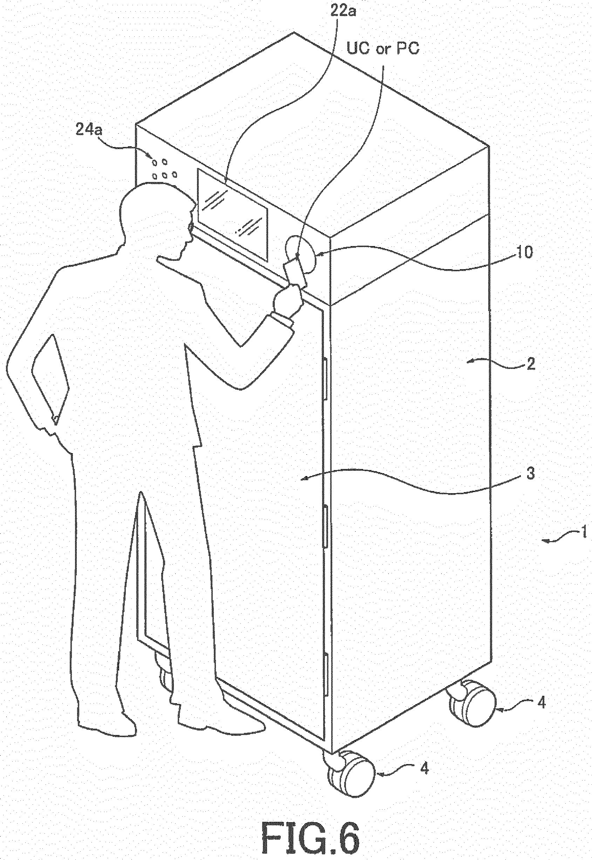

FIG. 4 shows a user card **UC** used for the item storage system according to the embodiment. FIG. 5 shows a picking list card **PC** used for the item storage system according to the embodiment. FIG. 6 shows a method for using the user card **UC** or the picking list card **PC** by a user in the item storage system according to the embodiment.

### (1-2-1) User card

A user card **UC** is a card for authorizing a user who is accessing the storage cabinet **1.**

Information about a photograph of a user face, a user ID, and a user name are printed on a front face of the user card **UC** illustrated in FIG. 4 for example. An RF tag (hereinafter referred to as "user tag") is embedded in the user card **UC.** The user tag is an example of a second tag.

The user tag records data (hereinafter referred to as "user data") regarding a user ID, a name, a department, and a position of a user. The user ID is data used for authorization of a user using the user card ID. Data regarding a name, a department, and a position of the user are optional and thus not mandatory for authorization of the user.

As illustrated in FIG. 6, in a case in which a user uses the user card **UC,** the user holds the user card **UC** over (that is, makes the user card **UC** proximate to) the access antenna part **10** of the storage cabinet **1** in order to cause the storage cabinet 1 recognize the user card **UC.**

Note that information regarding a user ID, a name, a department, and a position *etc.* of a user may not be necessarily printed on the user card **UC,** and that any information may not be printed on the user card **UC.**

### (1-2-2) Picking list card

A picking list card is a card used when a user retrieves, from the storage cabinet 1, an item which the user wishes to take out of the storage cabinet **1** (hereinafter referred to as "pick item").

As illustrated in FIG. 5, an RF tag (hereinafter referred to as "picking list tag") is embedded in the picking list card **PC.** The picking list tag records data (hereinafter referred to as "picking list data") regarding an item code and a lot number. The item code is information for identifying an item. The lot number is data associated with a lot (unit production) when the item was manufactured. That is, the same items associated with the same lot number are proven to have been manufactured in the same lot. The pick item(s) are specified by a condition indicated in the picking list data.

As illustrated in FIG. 6, in a case in which a user uses the picking list card **PC,** the user holds the picking list card **PC** over (that is, makes the picking list card **PC** proximate to) the access antenna part **10** of the storage cabinet **1** in order to cause the storage cabinet 1 recognize the picking list card PC.

### (1-3) Full scanning

Next, full scanning will be described. Full scanning is processing provided for the item storage system according to the present embodiment.

"Full scanning" is processing for reading item data recorded in item tag(s) which are attached to all items stored in the storage cabinet **1.** A condition of executing full scanning in the item storage system according to the present embodiment is: (i) the storage cabinet **1** has been activated, or (ii) an authorized user has changed the state of the door **3** from an open state to a closed state. The condition may be: (iii) a preset period of time has passed since the last full scanning was executed, or (v) it has reached a preset time. In such case, full scanning may be executed periodically. In a case in which there are many items stored in the storage cabinet **1,** it may take as long as 20 seconds for example to complete executing full scanning.

When an authorized user changes the state of the door **3** from the open state to the closed state, it is assumed that a user operation of retrieval of an item from and/or storing an item into the storage cabinet **1** has been completed, that is, a transaction with regard to a single user access has been completed. By executing full scanning at this time, it is possible for the storage cabinet **1** to continuously recognize the latest information of item(s) stored in the storage cabinet **1.**

### (1-4) Pick scanning

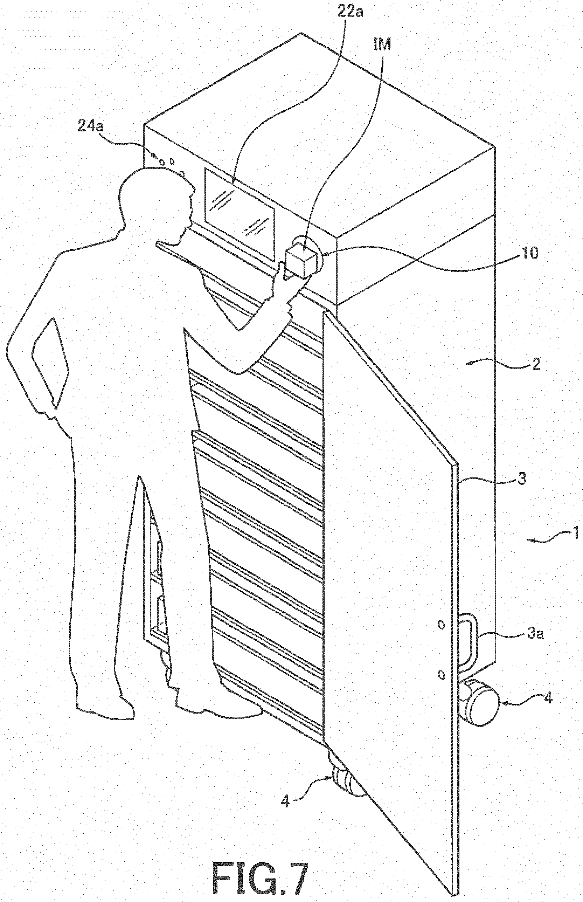

Next, pick scanning will be described with reference to FIG. 7. Pick scanning is processing provided for the item storage system according to the present embodiment. FIG. 7 shows a method for scanning an item by a user in the item storage system according to the present embodiment.

The item storage system according to the present embodiment includes a function for displaying item data on the display panel **22a** in a short period of time after a user holds a single item over the access antenna part **10** of the storage cabinet **1.** The item data is recorded in an item tag of that item. That is, as illustrated in FIG. 7, when a user holds an item **IM** over (that is, makes the item **IM** proximate to) the access antenna part **10** of the storage cabinet **1,** the user can cause the storage cabinet **1** to recognize the item **IM1** and cause the display panel **22a** to display a judgement result of whether the item data recorded in the item tag attached to the item **IM1** is proper and whether the item **IM1** is a proper item. In the following description, this function is referred to as "pick scanning."

Pick scanning is executable when the door **3** is in the open state, and contributes to good operability when a user wishes to rapidly check data regarding an item that the user is holding. Note that pick scanning may be set to be operable even when the door **3** is in the closed state.

### (2) Internal configuration of Storage cabinet

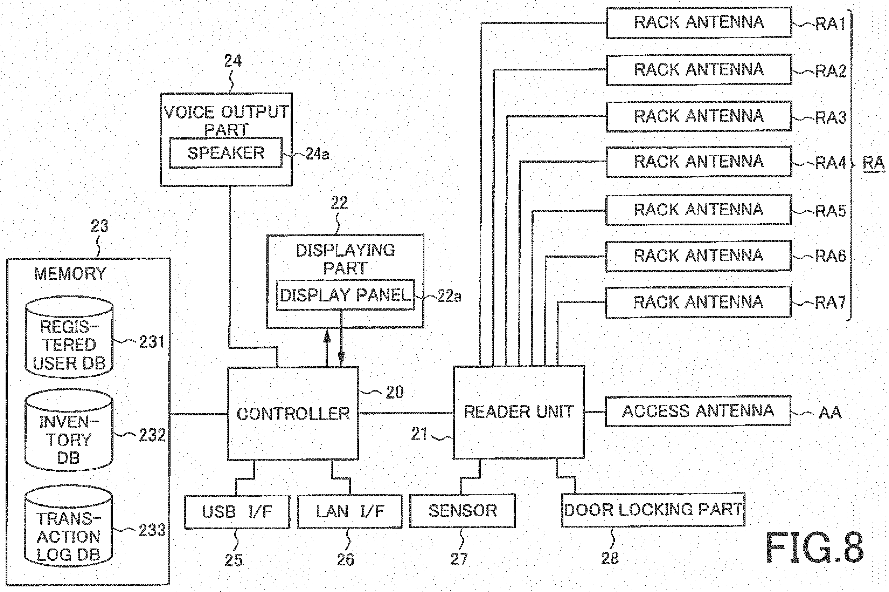

Next, an internal configuration of the storage cabinet **1** according to the present embodiment will be described with reference to FIG. 8. FIG. 8 is a block diagram of the internal configuration of the storage cabinet according to the embodiment.

As illustrated in FIG. 8, the storage cabinet **1** according to the present embodiment includes a controller **20,** a reader unit **21,** a displaying part **22,** a memory **23,** a voice output part **24,** an USB interface **25,** a LAN interface **26,** a sensor **27,** a door locking part **28,** an access antenna **AA,** and rack antennas **RA.**

The controller **20** includes a microprocessor, a read only memory (ROM), and a random access memory (RAM), as major components. The ROM records an operating system (OS) and application program(s). The microprocessor reads a program from the ROM and executes the program when the storage cabinet **1** is activated, in order to realize a variety of functions of the storage cabinet **1,** which will be described later. Application programs recorded in the ROM includes an item management application program (hereinafter simply referred to as "item management application") for managing item(s) in the storage cabinet 1. The controller **20** includes a real-time clock IC to constantly measure time.

The controller **20** is an example of the first controller, the second controller, and the third controller. The first controller controls in a later-described first mode. The second controller controls in a later-described second mode.

The reader unit **21** transmits data to and receives data from the controller **20.** The reader unit **21** is an example of a first reader and a second reader.

The reader unit **21** is connected to the access antenna **AA.** The reader unit **21** transmits a signal to the access antenna **AA** so that the access antenna **AA** radiates an electric wave. When receiving data from the access antenna **AA,** the reader unit **21** transmits the data (that is, data that have been read) to the controller **20.** The data transmitted from the access antenna **AA** to the controller **20** is user data, picking list data or item data.

The reader unit **21** is connected to each of the rack antennas **RA1** to **RA7,** namely the rack antennas **RA.** The reader unit **21** transmits a signal to each rack antenna so that the respective rack antennas radiates an electric wave. When receiving data from each of the rack antennas **RA1** to **RA7,** the reader unit **21** transmits the data (that is, data that have been read) to the controller **20.** The data transmitted from each of the rack antennas **RA1** to **RA7** is item data recorded in the item tag that is attached to the item **IM** stored in each of the racks **R1** to **R7.**

Note that the controller **20** may control the reader unit **21** so that the rack antennas **RA1** to **RA7** operate when a predetermined condition is met. The predetermined condition may be that the storage cabinet **1** has been activated, or that the state of the door **3** has changed from the open state to the closed state, for example.

The reader unit **21** receives, from the sensor **27,** data indicating whether the door **3** is in the open state or the closed state, and transmits the data to the controller **20.** Further, based on a control signal from the controller **20,** the reader **21** transmits, to the door locking part **28,** a signal for instructing to lock or unlock the door **3.**

The displaying part **22** includes a display driver circuit (not shown) and a display panel **22a.** The displaying part **22** displays images on the display panel **22a** based on image signals transmitted from the controller **20.** The display panel **22a** is a liquid crystal panel (LCD) for example. The images displayed on the display panel **22a** include an image indicating a processing result based on data read by the reader unit **21** and an image indicating a variety of messages such as an error message. The displaying part **22** is an example of each of the first alarm part and the second alarm part.

In the example of the present embodiment, the display panel **22a** is a touch panel that receives a touch input from a user.

The memory **23** is a non-volatile memory such as a flash memory. The memory **23** records a registered user database **231,** an inventory database **232,** and a transaction log database **233.** The memory **23** is accessed by the controller **20** as appropriate so that each database is updated. Each data configuration of the registered user database **231,** the inventory database **232,** and the transaction log database **233** will be described later.

The voice output part **24** includes a signal processing circuit (not shown) and a speaker **24a.** The voice output part **24** performs signal processing with regard to a voice signal transmitted from the controller **20.** Then, the voice output part **24** amplifies and outputs the voice signal as a voice message from the speaker **24a.** The voice output part **24** is an example of each of the first alarm part and the second alarm part.

The USB interface **25** is connected to an external device that is adapted to a wireless LAN complying with IEEE 802.11 such as WiFi (registered trademark). The USB interface **25** is provided to connect the storage cabinet 1 to the Internet or the like. For example, the storage cabinet **1** according to the present embodiment is configured to transmit an email to a manager thorough WiFi (registered trademark) when a predetermined condition is met. The USB interface **25** is an example of the transmitter.

The LAN interface **26** is configured to connect the storage cabinet 1 to an external device through a wired LAN.

The sensor **27** detects whether the door **3** is in the open state or the closed state. The sensor **27** may be an optical sensor of a thru-beam type or a reflective type for example. A detection result of the sensor **27** is sequentially transmitted from the reader unit **21** to the controller **20.**

The door locking part **28** may be an electronic lock that locks and unlocks the door **3** in accordance with an instruction from the controller 20 through the reader unit **21.**

### (3) Databases managed by Storage cabinet

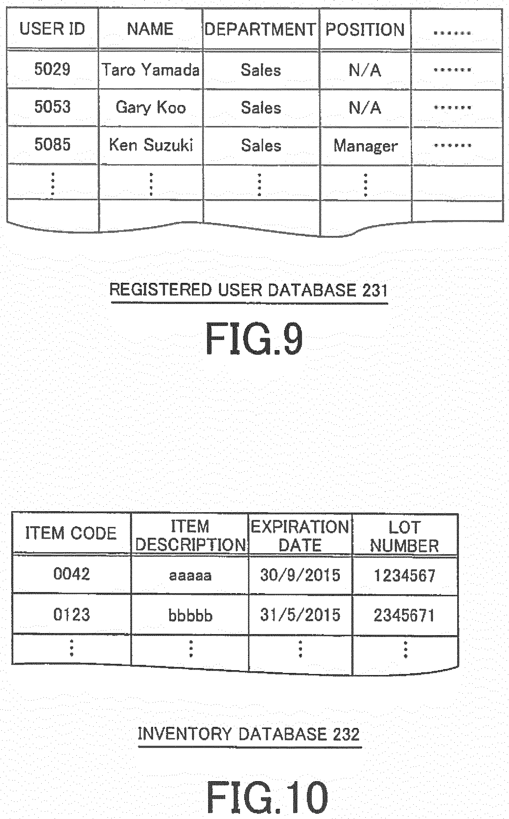

Next, the databases referred to in the item storage system according to the present embodiment will be described with reference to FIGS. 9 to 11.

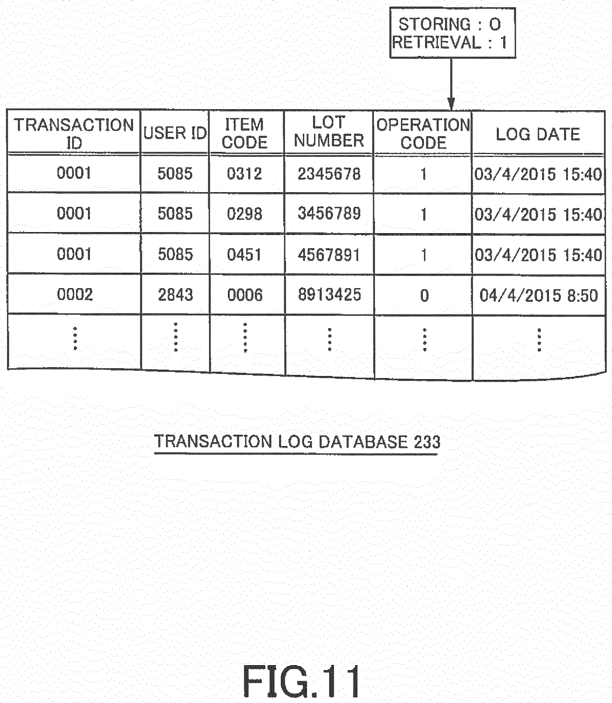

FIG. 9 shows an example of data configuration of the registered user database **231.** FIG. 10 shows an example of data configuration of the inventory database **232.** FIG. 11 shows an example of data configuration of the transaction log database **233.**

The registered user database **231** is a database in which information of user(s) having been permitted and registered to access the inside of the storage cabinet **1** (hereinafter referred to as "registered user(s)") are recorded. In an example illustrated in FIG. 9, the registered user database **231** includes records, each of which contains data for respective fields of: a user ID, a name, a department, a position and *etc.* The fields provided in the registered user database **231** are the same as or a part of the fields of the user data (*see* FIG. 4) recorded in a user tag of the user card **UC.**

The registered user database **231** is used to authenticate a user who is trying to access the inside of the storage cabinet **1.**

It should be noted that, in an example of the present embodiment, judgement of whether an access is permitted or not is made based on whether a user ID recorded in the user card **UC** is the same as any one of user ID(s) recorded in the registered user database **231;** however, judgement of whether an access is permitted is not limited to this example. Alternatively, information of whether an access is permitted may be recorded in the user card **UC,** and such information may serve to directly judge whether the access is permitted. In such case, the registered user database **231** is not mandatory in this system.

The inventory database **232** is a database in which the latest item data (that is, the item data that has been recorded last) of all item(s) stored in the storage cabinet **1** are recorded. That is, the item data recorded in the inventory database **232** correspond to the latest result of full scanning.

In an example illustrated in FIG. 10, the inventory database **232** includes records, each of which contains data for respective fields of: an item code, an item description, a lot number, and an expiration date. The fields provided in the inventory database **232** are the same as or a part of the fields of the item data (*see* FIG. 3) recorded in an item tag that is attached to each item.

The inventory database **232** is used to determine a difference between item(s) stored in the storage cabinet **1** before a single transaction and those after the transaction.

The transaction log database **233** is a database in which a result of respective transaction(s) of a user is recorded in a chronological order. In an example of FIG. 11, the transaction log database **233** includes records, each of which contains data for respective fields of: a transaction ID, a user ID, an item code, a lot number, an operation code, and a log date. The transaction ID is identification data for identifying a single operation by a user, that is, identifying an operation during a period of time beginning at a time when the state of the door **3** of the storage cabinet 1 is changed from a closed state to an open state and ending at a time when the state of the door **3** is changed again to the closed state. The user ID is an ID of a user who have accessed the storage cabinet **1** in association with a transaction corresponding to the transaction ID. The item code and the lot number are data of an item corresponding to an operation code (storing: 0, retrieval: 1). The log date is a date when a transaction corresponding to the transaction ID has completed (a date when the state of the door **3** has been changed to the closed state, for example).

### (4) Processing executed in Item storage system

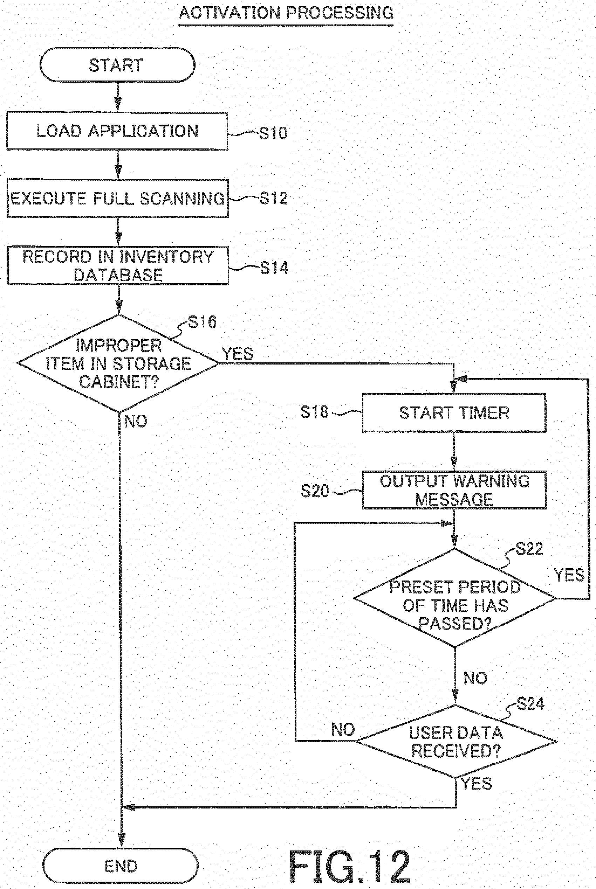

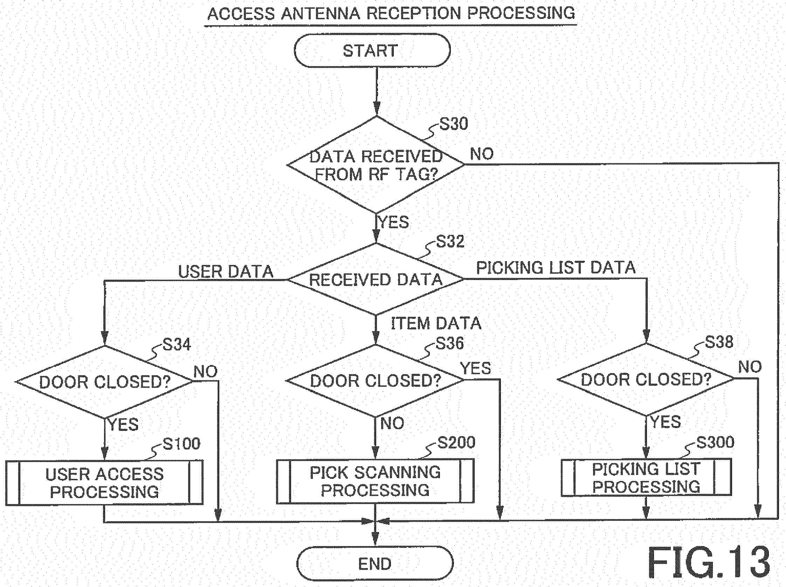

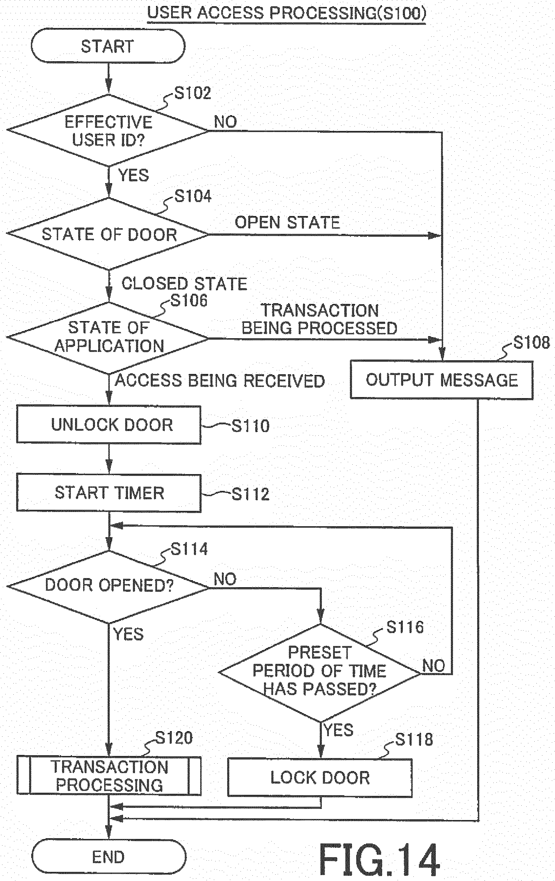

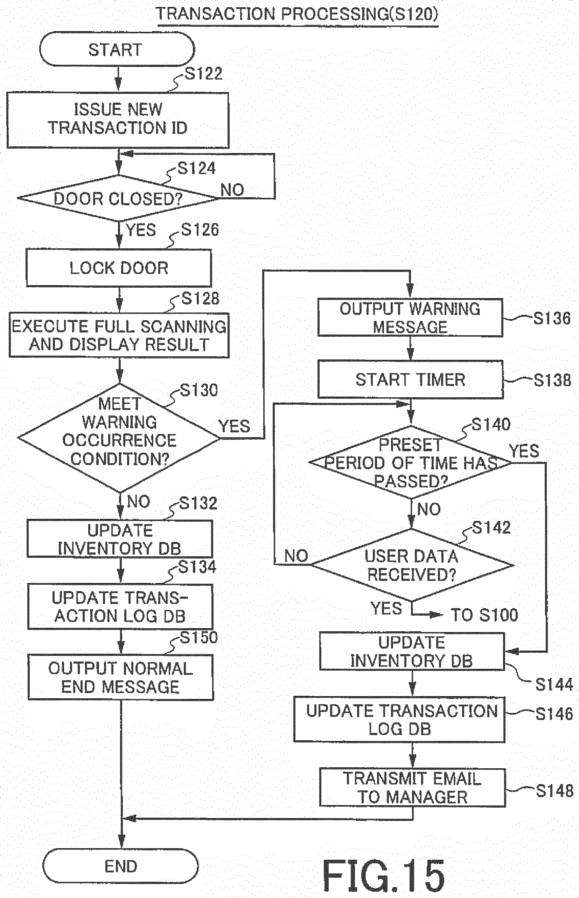

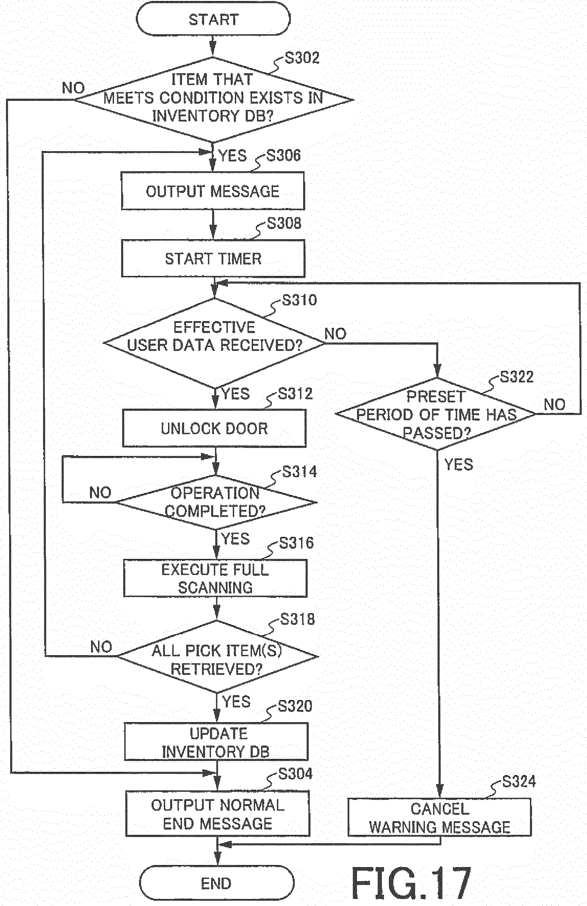

Next, processing executed in the item storage system will be described with reference to FIGS. 12 to 19. FIG. 12 shows a flowchart of activation processing of the item storage system according to the present embodiment. FIG. 13 shows a flowchart of access antenna reception processing of the item storage system according to the present embodiment. FIG. 14 shows a flowchart of user access processing of the item storage system according to the present embodiment. FIG. 15 shows a flowchart of transaction processing of the item storage system according to the present embodiment. FIG. 17 shows a flowchart of picking list processing of the storage cabinet according to the present embodiment.

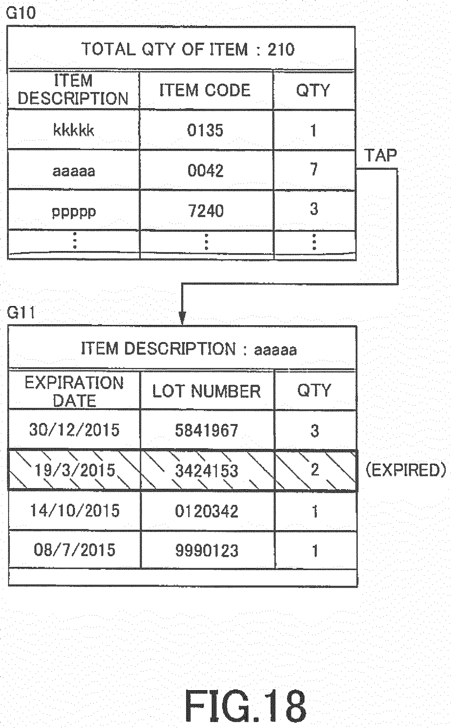

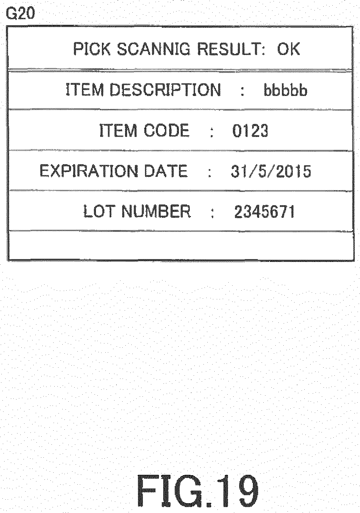

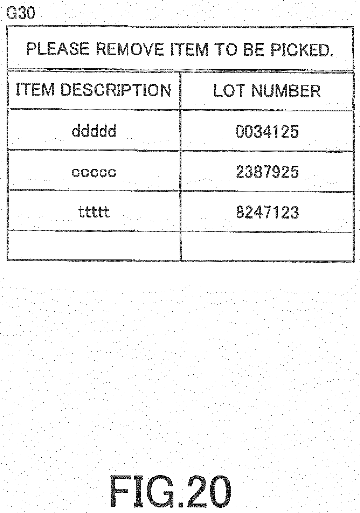

FIGS. 18 to 20 respectively show a displayed example of the storage cabinet **1** according to the present embodiment. FIG. 18 shows an execution result of full scanning. FIG. 19 shows an execution result of pick scanning. FIG. 20 shows an execution result when a picking list card is scanned.

It is not referred to in the following explanation for each processing that, when item data recorded in an item tag of an item in the storage cabinet 1 is judged as unrecognizable after the item data is read, a message indicating that the item is unrecognizable is output from the display panel **22a** and/or the speaker **24a.** Such message may be a text of "There is an unrecognizable item (item description: aaaaa). Please remove this item." for example. The situation of "when item data is judged as unrecognizable" may happen in a case in which a lot number is not included in the item data, a case in which the lot number is not recognized as proper data, or the like.

### (4-1) Activation processing of Item storage system (FIG. 12)

When a power supply of the storage cabinet **1** is turned on, the controller **20** of the storage cabinet **1** starts up the OS. Then, the controller **20** reads and loads on the OS the item management application for managing item(s) in the storage cabinet **1** (S10), and executes the application. The controller **20** executes the item management application to perform the following processing.

Firstly, the controller **20** executes full scanning (S12). That is, the controller **20** reads data recorded in item tag(s) which are attached to all items stored in the storage cabinet **1,** and records the data in the inventory database **232** (S14). The controller **20** then judges whether an improper item is stored in the storage cabinet **1** based on the data that have been read (S16). The improper item is, for example, an item that is past its expiration date. In such case, the judgment in S16 is made based on whether any record exists which has a value of the field of expiration date recorded which is earlier than present time, in the inventory database **232.** If an improper item does not exist in the storage cabinet 1 (S16: NO), then the controller **20** terminates the activation processing.

If an improper item does exist in the storage cabinet **1** (S16: YES), then a warning voice message is output every preset period of time. More specifically, the controller **20** starts a timer (S18), and controls the voice output part **24** so that the warning voice message is output from the speaker **24a** (S20). If a preset period of time has not passed (S22: NO) since the timer starts and a user holds the user card **UC** over the access antenna part **10,** that is, user data is received within the preset period of time (S24: YES), then controller **20** terminates the activation processing and proceeds to the access antenna processing, which will be described later. If the preset period of time has passed since the timer starts without the user's holding the user card **UC** over the access antenna part **10** (S22: YES), the controller **20** resets and restarts the timer, and controls the voice output part **24** so that the warning voice message is output. Therefore, a warning message is output every preset period of time unless a user passes the user card **UC** over the access antenna part **10.**

Note that, in a case in which full scanning is executed at a preset time after the storage cabinet 1 is started up, the processing S12 and thereafter in the flowchart of FIG. 12 are executed at that preset time.

### (4-2) Access antenna processing of Item storage system (FIG. 13)

Access antenna processing is executed when a user holds a card or an item over the access antenna part **10** of the storage cabinet **1** after the activation processing of the item storage system. Note that other processing may be interrupted to execute the access antenna processing.

If receiving data form an RF tag through the access antenna **AA** (S30: YES) and the received data is user data (S32: user data), the controller **20** executes user access processing (S100) when the door is in the closed state (S34: YES). Specific contents of the user access processing are shown in the flowchart of FIG. 14. When the door is in the open state, the controller **20** executes nothing (S34: NO).

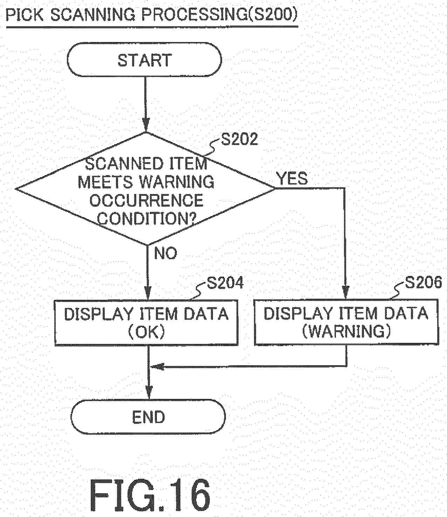

If receiving data form an RF tag through the access antenna **AA** (S30: YES) and the received data is item data (S32: item data), the controller **20** executes pick scanning processing (S200) when the door is in the open state (S36: NO). Specific contents of the pick scanning processing are shown in the flowchart of FIG. 16. When the door is in the closed state, the controller **20** executes nothing (S36: YES).

If receiving data form an RF tag through the access antenna **AA** (S30: YES) and the received data is picking list data (S32: picking list data), the controller **20** executes picking list processing (S300) when the door is in the closed state (S38: YES). Specific contents of the picking list processing are shown in the flowchart of FIG. 17. When the door is in the open state, the controller **20** executes nothing (S38: NO).

### (4-3) User access processing of Item storage system (FIG. 14)

If the received data through the access antenna **AA** is user data, then the controller **20** executes authentication processing for judging whether a user ID included in the user data is effective or not (S102). In the authentication processing, the controller **20** judges whether the user ID included in the received user data is identical to any user ID in the records of the registered user database **231,** and determines that the user ID included in the received user data is effective if an identical user ID exists in the registered user database **231.**

If the user ID is not effective (S102: NO), then the controller **20** outputs a message notifying that the user ID is not effective, through the display panel **22a** and/or the speaker **24a** (S108), and terminates the user access processing.

If the user ID is effective (S102: YES), then the controller **20** judges whether the door **3** is in the open state or the closed state, based on a sensor output transmitted from the sensor **27** through the reader unit **21** (S104). If the door **3** is in the open state (S104: open state), it is assumed that other user is storing an item into the storage cabinet **1** or retrieving an item from the storage cabinet **1.** Therefore, the controller **20** outputs a message such as "Please wait for a while." through the display panel **22a** and/or the speaker **24a** (S108), and terminates the user access processing.

Next, the controller **20** judges whether the state of the item management application is that a transaction is being processed or that an access is being received (S106). The state "a transaction is being processed" is, for example, a state in which full scanning is being executed after a user who has accessed the storage cabinet **1** last closes the door. If a user's access was permitted during a period of time in which full scanning is being processed in association with the previously-accessed user, a transaction by the previously-accessed user could not be precisely recorded in the transaction log database **233.** In view of the above, the controller **20** prohibits the next user's access during a period of time in which full scanning is being processed in association with the previously-accessed user. If a transaction is being processed (S106: transaction being processed), the controller **20** outputs a message such as "Please wait for a while." through the display panel **22a** and/or the speaker **24a** (S108), and terminates the user access processing.

If the access is permitted, the controller **20** firstly controls the door locking part **28** through the reader unit **21** to unlock the door **3** (S110).

In an example of the present embodiment, the door **3** is configured to be locked when the door **3** is not in the open state until a preset period of time has passed since the door **3** is unlocked. More specifically, the controller **20** starts a timer (S112). If the controller **20** judges that the door **3** is not in the opened (S114: NO), the controller **20** waits until the preset period of time has passed (S116: NO). If the controller **20** judges that the door **3** is in the opened until the preset period of time has passed (S114: YES), the controller **20** executes transaction processing and then terminates the user access processing (S120). The transaction processing will be described later. If the preset period of time has passed since the timer starts without the door being in the open state (S116: YES), the controller **20** controls the door locking part **28** through the reader unit **21** to lock the door **3** (S118), and terminates the user access processing.

### (4-4) Transaction processing of Item storage system (FIG. 15)

A flowchart of FIG. 15 shows a detailed flow of the transaction processing (S120) in FIG. 14.

In the transaction processing, a transaction ID is assigned to a period of time beginning at a time when a user of an effective user ID changes the state of the door to the open state and ending at a time when the use changes the state of the door again to the closed state, that is, a period of time in which a single transaction has been performed. A result of an operation of storing an item into and/or retrieval of an item from the storage cabinet 1 during that period of time is recorded in the transaction log database **233** in association with the transaction ID.

In the transaction processing, the controller **20** firstly issues a new transaction ID (S122). The controller **20** waits until an operation is completed by a user, that is, the door 3 is in the closed state again (S124: NO). If the door 3 is judged to be in the closed state (S124: YES), the controller **20** executes processing S126 and thereafter, judging that the transaction by the user has been completed.

The controller **20** controls the door locking part **28** through the reader unit **21** to lock the door **3** (S126), and then executes full scanning. That is, the controller **20** reads data recorded in item tag(s) which are attached to all items stored in the storage cabinet **1.** The controller **20** then controls the displaying part **22** to display a result of the full scanning (S128).

An image G10 of FIG. 18 shows an example of a result of full scanning which is displayed in the display panel **22a.** Displayed in this example are: a total quantity of item(s) in the storage cabinet 1, and a list of respective item(s) (an item description, an item code, and a quantity for each item). Here, after any one of item rows is tapped on the screen for example, more detailed information may be displayed with regard to the tapped item. In an example shown in FIG. 18, after an item row corresponding to the item description: aaaaa in the list of the image G10 is tapped, an image G11 will be displayed including information of an expiration date, a lot number, and a quantity, as more detailed information with regard to the item description: aaaaa.

Referring again to FIG. 15, after executing full scanning, the controller **20** judges whether any one of predetermined warning occurrence conditions is met (S130). The warning occurrence conditions includes, but not limited to, the following conditions.

### [Warning occurrence conditions]

(Condition 1) An item having a period of time to an expiration date which is not the shortest among items of the identical item code, has been retrieved. That is, a user has retrieved an item having a later expiration date rather than one having an earlier expiration date.

(Condition 2) An expired item has been retrieved.

(Condition 3) An expired item exists in the storage cabinet **1.**

(Condition 4) An item to be picked exists in the storage cabinet **1.**

In order to judge whether the condition 1 or the condition 2 is met, the controller **20** compares the execution result of S128 and the inventory database **232** (that is, the latest data based on a transaction being performed).

In order to judge whether the condition 3 is met, the controller **20** compares the execution result of S128 and the present time.

A judgment of whether the condition 4 is met may be made when the RAM in the storage cabinet **1** records picking list data. That is, the judgment may be made, when a user performing a transaction or other user makes the storage cabinet **1** read picking list data included in a picking list card **PC,** and the storage cabinet **1** therefore records the picking list data. In this case, the controller **20** compares the picking list data and the execution result of S128 to judge whether the condition 4 is met.

If any one of the warning occurrence conditions is not met (S130: NO), the controller **20** updates the inventory database **232** (inventory DB) (S132) based on the execution result of S128, and updates the transaction log database **233** (transaction log DB) (S134). In updating the transaction log database **233,** the controller **20** firstly identifies content(s) of storing and/or retrieval with regard to each item, based on a difference between data that have been recorded in the inventory database **232** immediately before S132 and the execution result of the full scanning in S128. The controller **20** then associates the identified content(s) with a user ID included in user data (*see* S30 in FIG. 13) that have been received, and add one or plurality of records in the transaction log database **233.** After the update of the transaction log database **233** (S134) is completed, the controller **20** outputs a message notifying that the transaction has been normally completed (S150), and terminates the transaction processing.

If any one of the warning occurrence conditions is met (S130: YES), the controller **20** controls the displaying part **22** and/or the voice output part **24** so that the display panel **22a** and/or the speaker **24a** outputs a warning message in accordance with a warning occurrence condition (S136). The controller **20** then starts a timer (S138), and judges whether user data is received (that is, whether a user holds a user card IC over the access antenna part **10**) until a preset period of time has passed (S142). If user data is not received after the preset period of time has passed (S140: YES), the controller **20** updates the inventory database **232** (inventory DB) (S144), and updates the transaction log database **233** (transaction log DB) (S146). The controller **20** then transmits an email notifying that an error has occurred in the storage cabinet **1,** to a manager's address that is registered in advance (S148), and terminates the transaction processing.

On the other hand, in a case in which the user holds the user card over the access antenna part **10** within a preset period of time after the warning message is output, and user data is therefore received (S140: YES), the controller **20** executes the user access processing of FIG. 14 again. At this time, in S102, it is preferable to judge that the received user data is effective if it is identical to the user ID of the user who is performing the transaction. That is, preferably, only the user who has initiated a warning may be permitted to restart a transaction in the preset period of time and to store an item into and/or retrieve an item from the storage cabinet **1** so that a warning does not occur.

In S140, the controller **20** may proceed to S100 only when receiving effective user data. When receiving data other than the effective user data in S140, the controller **20** may not proceed to S100 but execute the same processing as a case in which any user data is not received. Here, "effective user data" is data associated with a specific corporate member of a manufacturer of an item or a supplier of an item, for example. Only an authorized user may cancel the warning, thereby carrying out proper maintenance surely with regard to the item(s) in the storage cabinet **1.**

### (4-5) Pick scanning processing of Item storage system (FIG. 16)

When data received through the access antenna **AA** is item data (S30 in FIG. 13: YES; item data), the controller **20** judges, based on the item data, whether the scanned item meets any one of the following warning occurrence conditions (S202). This judgment is made by referring to item data of the scanned item or by comparing the item data and the inventory database **232.**

### [Warning occurrence conditions]

(Condition 1) An item having a period of time to an expiration date which is not the shortest among items of the identical item code, has been scanned. That is, a user has retrieved an item having a later expiration date rather than one having an earlier expiration date.

(Condition 2) An expired item has been scanned.

If the controller **20** judges that the scanned item does not meet any one of warning occurrence conditions (S202: YES), the controller **20** displays the received item data and a judgment result (OK) (S204). FIG. 19 illustrates an image G20 indicating an example of a pick scanning result. In this example, an item description, an item code, an expiration date, and a lot number, as the received item data, is displayed, and a text of "Pick scanning result: OK" is displayed as the judgment result.

If the controller **20** judges that the scanned item meets any one of the warning occurrence conditions (S202: NO), the controller **20** displays the received item data and a judgment result (WARNING) (S206).

A user holds over the access antenna part **10** an item that he or she is about to store into the storage cabinet **1** or an item that he or she is about to retrieve from the storage cabinet 1 during the transaction, and will then be able to immediately recognize whether the item is a proper one (that is, whether the item is one that does not meet any warning occurrence condition).

### (4-6) Picking list processing of Item storage system (FIG. 17)

When data received through the access antenna **AA** is picking list data (S30 in FIG. 13: YES; picking list data), the controller **20** judges whether an item that meets a condition indicated by the received picking list data exists in the inventory database **232** (S302). The item that meets a condition indicated by the received picking list data is one that should be retrieved from the storage cabinet **1.** When the condition indicated by the received picking list data is an item code and a lot number for example in S302, the controller **20** searches the inventory database **232** by keys as the item code and the lot number, and judges whether any item includes the identical item code and the identical lot number.

If any item that meets the condition indicated by the picking list data does not exist in the inventory database **232** (S302: NO), the controller **20** displays a normal end message (S304) and terminates the picking list processing.

If any item that meets the condition indicated by the picking list data exists in the inventory database **232** (S302: YES), processing S306 and thereafter are executed. The controller **20** firstly controls the displaying part **22** to display a predetermined message on the display panel **22a** (S306), and starts a timer (S308). FIG. 20 illustrates an example of an image including the predetermined message that is displayed on the display panel **22a** in S306. FIG. 20 illustrates an image G30 showing a list of items (an item description and a lot number of each item) to be retrieved from the storage cabinet **1** and a message urging a user to retrieve the items.

When, in a preset period of time (S322: NO), effective user data is received (S310: YES), the door is unlocked (S312). "Effective user data" is associated with a user authorized to retrieve (or collect) a specific item or an item that meets a specific condition, as an item to be retrieved, from the storage cabinet **1.** Here, it is assumed that a user preauthorized to retrieve an item among registered users is recorded in the registered user database **231.** In this case, the controller **20** searches the registered user database **231** by a key as user ID included in the received user data, and judge whether the received user data is effective or not.

If the controller **20** judges that the received user data is effective, the door is unlocked (S312), thereby allowing a user to open the door **3** and perform an operation of retrieval.

When the state of the door **3** changes from the closed state to the open state and changes again to the closed state, the controller **20** judges that the operation of retrieval has completed (S314: YES), and executes full scanning to display a result of the full scanning on the display panel **22a** (S316). That is, the controller **20** reads data recorded in item tag(s) which are attached to all items stored in the storage cabinet **1.** The controller **20** then judges whether all pick item(s) are retrieved (collected) from the storage cabinet **1** (S318).

The judgment in S318 will be made in the following fashion. That is, the controller **20** extracts item data that meets an item condition indicated by the picking list data received in S30, from item data recorded in the inventory database **232** (that is, item data indicated by an execution result of the last full scanning). In other words, the controller **20** extracts pick item(s) from item(s) in the storage cabinet **1** that have been targeted for the last full scanning. The controller **20** then judges whether the extracted pick item(s) are included in the item(s) that have been targeted for the full scanning in S316. If the pick item(s) are not included, the controller **20** judges that all pick item(s) have been retrieved. If even one pick item is included, the controller **20** judges that all pick item(s) have not been retrieved.

If the controller **20** judges that all pick item(s) have been retrieved (S318: YES), the controller **20** updates the inventory database **232** based on the execution result of the full scanning in S316 (S230), displays a normal end message (S304), and terminates the picking list processing. If the controller **20** judges that all pick item(s) have not been retrieved, the controller **20** returns to S306 (S318: NO) and outputs a warning message.

Processing of S306 to S318 are repeated until all item(s) that meet the condition indicated by the picking list data are retrieved from the storage cabinet **1.** Note that, when effective user data is not received within a preset period of time after a warning message is output (S322: YES), the controller **20** cancels the warning message (S324) and returns to a normal operation. The reason why the warning message is cancelled without a user card **UC** held over the access antenna part **10** in the preset period of time is that there may be a case in which other user wishes to urgently retrieve an item from the storage cabinet **1.**

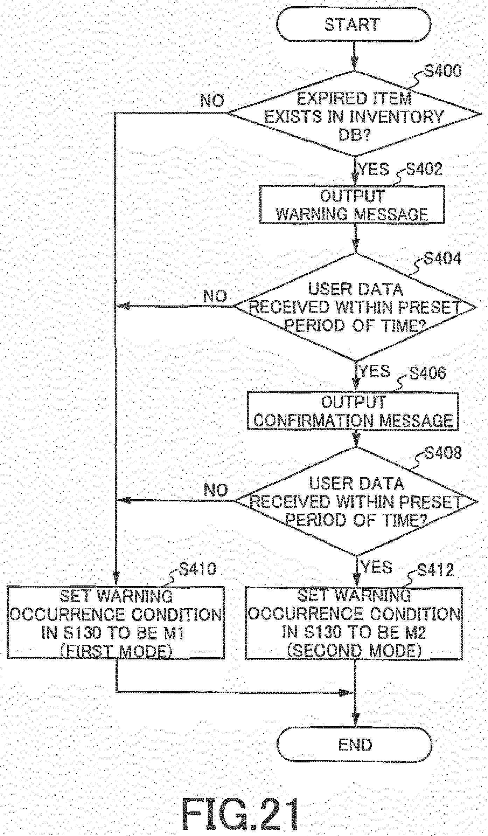

### (4-7) Example of Method for managing expiration date of Item in Storage cabinet (FIG. 21)

Next, a preferable example of a method for managing an expiration date of an item in the storage cabinet 1 will be described with reference to a flowchart of FIG. 21.

In this example, a warning occurrence condition (*see* S130 of FIG. 15) in the transaction processing by a user is selectively determined to be a condition M1 or a condition M2 based on a judgment result, which will be described. The conditions M1 and M2 are as follow.

(Condition M1) An item other than an item having a period of time to an expiration date which is the shortest among items of the identical item code, has been retrieved from the storage cabinet 1.

(Condition M2) An item other than an expired item has been retrieved.

In the following description, a control in which a warning occurrence condition is set to be the condition M1 is referred to as "a first mode", while a control in which a warning occurrence condition is set to be the condition M2 is referred to as "a second mode."

Though an item is not expired when the item is stored (entered) into the storage cabinet **1,** the item can be expired during a period of time in which the item is stored in the storage cabinet **1.** Therefore, in the storage cabinet **1** according to the present embodiment, as will be described below, it is preferable to manage an expiration date of an item stored in the storage cabinet **1.**

In the storage cabinet **1,** the controller **20** sequentially compares a value of expiration date of each item in the inventory database **232** and the present time. If the controller **20** judges that any one of the values of expiration date does not reach the present time, that is, there is not an expired item (S400: NO), the controller **20** sets the warning occurrence condition to be the condition M1 (S410). When the warning occurrence condition is set to be the condition M1, that is the first mode, it is permitted to retrieve an item having a period of time to an expiration date which is the shortest among items of the identical item code. A warning message is output if an item other than an item having a period of time to an expiration date which is the shortest, has been retrieved. A warning message is also output if an expired item has been retrieved.

On the other hand, if the controller **20** judges that any one of the values of expiration date is identical to the present time, that is, there is an expired item (S400: YES), the controller **20** according to the invention displays a warning message on the display panel **22a** (S402). When a user holds a user card **UC** over the access antenna part **10,** that is, the storage cabinet **1** receives user data within a preset period of time after the warning message is output (S404: YES), a confirmation message such as "Do you retrieve an expired item?" is output on the display panel **22a** and/or from the speaker **24a** (S406). If the controller **20** does not receive user data in S404 (S404: NO), the controller **20** sets the warning occurrence condition to be the condition M1 in S130 (*see* FIG. 15) (S410). If the warning occurrence condition is set to be the condition M1, that is the first mode, it is permitted to retrieve only an item having a period of time to an expiration date which is the shortest among items of the identical item code. A warning message will be output if an item other than an item having a period of time to an expiration date which is the shortest, has been retrieved. A warning message will be also output if an expired item has been retrieved.

When a user holds a user card **UC** over the access antenna part **10** within a preset period of time after the confirmation message is output in S406, that is, the storage cabinet **1** receives user data (S408: YES), the controller **20** recognizes that the user is about to retrieve an expired item, and determines that the warning occurrence condition in S130 (*see* FIG. 15) is set to be the condition M2 (S412). If the warning occurrence condition is set to be the condition M2, that is the second mode, it is permitted to retrieve an expired item only. A warning message will be output if an item other than an expired item has been retrieved. A warning message will be also output if an item other than an item having a period of time to an expiration date which is the shortest among items of the identical item code, has been retrieved. Here, the reason why the warning is output when an unexpired item has been retrieved is that the user's intention to retrieve an expired item has been already confirmed in S408.

If the storage cabinet **1** does not receive user data within the preset period of time after the confirmation message is output in S406 (S408: NO), the controller **20** sets the warning occurrence condition in S130 (*see* FIG. 15) to be the condition M1 (S410).

In a case in which a user holds a user card **UC** over the access antenna part 10 after the warning occurrence condition is set to be the condition M1, execution of the user access processing is started.

If the controller **20** judges that an item other than an item having a period of time to an expiration date which is the shortest among items of the identical item code, has been retrieved (that is, the condition M1 has been met) in the transaction processing (FIG. 15) (S130: YES), the controller **20** outputs a warning message (S136). At this time, if the controller **20** judges that the user access processing is executed again in a preset period of time (S142: YES → S100), and an item that has been retrieved most recently is stored again (that is, an item is returned to the storage cabinet **1**) in the transaction processing (FIG. 15), then the controller **20** may judge that the condition is not met any longer (S130: NO). That is, whether the condition M1 is met or not in S130 is judged based on an item retrieval result during a period of time set in S140. If an item that meets the condition M1 has not been returned to the storage cabinet **1** in that period of time (S140: YES), the controller **20** controls the USB interface **25** to transmit an email to the mail address of the manager (S148).

When receiving user data in the preset period of time in S408 of FIG. 21, the controller **20** sets the warning occurrence condition to be the condition M2 and starts execution of the user access processing shown in FIG.14.

If the controller **20** judges that an item other than an expired item has been retrieved (that is, the condition M2 has been met) in the transaction processing (FIG. 15) (S130: YES), the controller **20** outputs a warning message (S136). At this time, if the controller **20** judges that the user access processing is executed again in a preset period of time (S142: YES → S100), and an item that has been retrieved most recently is stored again (that is, an item is returned to the storage cabinet **1**) in the transaction processing (FIG. 15), then the controller **20** may judge that the condition M2 is not met any longer (S130: NO). That is, whether the condition M2 is met or not in S130 is judged based on an item retrieval result during a period of time set in S140. If an item that meets the condition M2 has not been returned to the storage cabinet **1** in that period of time (S140: YES), the controller **20** controls the USB interface **25** to transmit an email to the mail address of the manager (S148).

In the example shown in the flowchart of FIG. 21, the warning occurrence condition is set to be the condition M1 in a normal case in which an expired item does not exist in the storage cabinet **1.** Thus, the storage cabinet **1** is controlled so that a user retrieves earlier an item having a period of time to an expiration date which is the shortest among items of the identical item code. Accordingly, in the normal case, the storage cabinet **1** is managed so that item(s) in the storage cabinet **1** are effectively retrieved for use. Thereby, a possibility of expiration of an item can be reduced.

On the other hand, in a case in which an expired item exists in the storage cabinet **1,** a user can select the condition M1 (the first mode) or the condition M2 (the second mode) as a warning occurrence condition by an operation of holding a user card UC over the access antenna part **10.** Thus, the user can determine, in accordance with the user's objective, whether he or she prioritizes to remove the expired item or to retrieve an item that he or she wishes to use. Thereby, it is prevented that the user misuses the storage cabinet **1.**

In the example shown in the flowchart of FIG. 21, a case is shown in which the controller **20** selects the first mode or the second mode based on whether a user holds a user card **UC** over the access antenna part **10** or not; however, other example is possible. Since the controller **20** recognizes the user ID in S404, the controller **20** may determine user's selection of the first mode or the second mode based on a touch operation with respect to the display panel **22a** in S408. It should note that the operations with the user card in both S404 and S408 allow for a system with excellent operability.

Though not shown in the flowchart of FIG. 21, when an item, a remaining period of time to an expiration date of which reaches a preset period of time, exists in the storage cabinet **1,** the controller **20** may control the displaying part **22** and/or the voice output part **24** to output alarm from the display panel **22a** and/or the speaker **24a.** For example, when the present time reaches three days before an expiration date of any one item of the item(s) in the storage cabinet **1,** the alarm is output to inform that the expiration date of the item is approaching. In this way, a user can take a proper action with respect to the item of which expiration date is approaching, before the item is expired. Such action may be using the item with priority, for example.

In the method for managing an expiration date, a case is shown in which processing of a warning message output (S402) and a mode selection (S400) are executed with reference to an expiration date of an item; however, other example is possible. A time to be referred to in the flowchart is not limited to an expiration date of an item but may be a reference time on a basis of an expiration of an item. For example, in S400, it may be judged whether any item of which reference time has passed exists in the inventory database **232.** A reference time of an item may be set as appropriate based on an expiration date of the item. For example, considering a margin, a reference time of an item may be a time two days before an expiration date of the item. A reference time of respective items in the storage cabinet **1** may be not necessarily identical but different for the respective items as appropriate. By setting a reference time for the respective items, an expiration date can be managed flexibly with respect to the respective items. A reference time as an expiration date is not necessarily a time itself, but may be a specific month, a specific day, or a combination thereof.

### (5) Application of Item storage system by User

### (5-1) Pick scanning

As shown in the flowchart in FIG. 15 of the transaction processing, full scanning is executed after a user has completed storing and retrieval of item(s) (a single transaction has been completed) and close the door **3.** The following is two reasons why full scanning is executed after the door **3** is closed. That is, firstly, once a user has retrieved an item from the storage cabinet **1,** he or she may return the item to the storage cabinet **1** during an operation. Thus, it is impossible to precisely read item(s) in the storage cabinet **1** before the door **3** is closed and a transaction is judged to have been completed. Second, if full scanning was executed while the door **3** is opened, communication performance might be deteriorated in accordance with external radio wave environment of the housing **2.**

Incidentally, execution of full scanning can take as long as 20 seconds and even longer, depending also on a total quantity of item(s) stored in the storage cabinet **1.** Thus, it may take a long time from a time when a user closes the door **3** to a time when the user confirms that a transaction has been normally completed (that is, waiting time may be long), which is inconvenient for the user.

In view of the above, a user can user pick scanning to shorten or eliminate the waiting time. For example, while a user performs a transaction and the door **3** is opened, a user may hold an item that he or she is about to retrieve from the storage cabinet **1,** over the access antenna part **10** (that is, perform pick scanning). In this way, the user can confirm whether he or she is about to retrieve a proper item. The user can identify item(s) that he or she has retrieved, based on an execution result of full scanning; however, if the user recognizes through pick scanning that he or she is about to retrieve a proper item, the user can close the door 3 to complete the transaction and immediately leave the storage cabinet 1 without waiting for a full scanning result. This has an advantage particularly in retrieving a small quantity of item(s).

### (5-2) Picking list card

A pick item is assumed to be retrieved from a plurality of storage cabinets 1 that are placed on a variety of locations. For example, in a case in which an item is a drug, it is required to retrieve an item that meets a specific condition from a plurality of storage cabinets **1** that are placed in a variety of hospitals. Under such circumstance, suppose that the plurality of storage cabinets **1** operates without being connected to a network. It would be cumbersome for a user to compare all items stored in respective storage cabinets **1** placed in respective hospitals, with a list noted on a paper for example, and to visually retrieve only a pick item from respective storage cabinets **1.** On top of that, there would be a drawback that an operator cannot immediately recognize whether all items to be removed (that is, all items to be retrieved) have been really removed.

On the other hand, with a pick listing card according to the present embodiment, it is possible to identify pick item(s) in the storage cabinet **1** before performing an operation. Thus, if pick item(s) are not stored in the storage cabinet **1,** a user does not have to search for the pick(s) in vain. Even if pick item(s) are stored in the storage cabinet **1,** a user can retrieve the pick item(s) relatively easily from the storage cabinet **1,** because the user already knows item(s) targeted for search. Particularly in a case in which storage cabinets **1** are placed in a variety of locations, a user, having a pick listing card only, circulates around the locations where storage cabinets **1** are placed, and can retrieve all pick item(s). That is, it is possible to surely retrieve desired item(s) in the storage cabinets.

### (6) Appendix

In the embodiment described above, an item to be retrieved from the storage cabinet **1** in the picking list processing is not limited. That is, a condition that should be met by an item to be retrieved may be set as appropriate. For example, when a large amount of a specific kind of items is required and collected from respective storage cabinets, an item code for identifying a kind of item, as information about an item condition with regard to an item to be collected, may be initially written in an RF tag embedded in a card. In a case in which an item to be retrieved is an item to be recalled, the picking list data includes information regarding a condition with which an item to be recalled is identifiable (an item code and a lot number, for example).

The information about the item condition may be associated with any condition with which item data of item(s) in the storage cabinet **1** are searchable so that a user can retrieve the item(s). For example, the item data may include at least one of an item description, an item code, an expiration date, and a lot number of the corresponding item; the item condition may include at least one of an item description, an item code, an expiration date, and a lot number of the item.

In the embodiment described above, a condition that "an expired item exists in the storage cabinet **1"** is applied as an example of a warning occurrence condition. Alternatively, a condition that "a period of time to an expiration date is shorter than a preset period of time" may be also applied. At this time, a length of the preset period of time may be determined as appropriate in accordance with an item to be stored.

In the embodiment described above, an example is shown in which full scanning is executed when the state of the door **3** is changed from the open state to the closed state (that is, the door **3** is closed); however, other example may be applied. While the state of the door **3** is the closed state, full scanning may be periodically executed, for example.

### DESCRIPTION OF REFERENCE NUMERALS

**1** Storage cabinet
**2** Housing
**3** Door
**3a** Door handle
**4** Wheels
**10** Access antenna part
**20** Controller
**21** Reader unit
**22** Displaying part
**22a** Display panel
**23** Memory
**231** Registered user database
**232** Inventory database
**233** Transaction log database
**24** Voice output part
**24a** Speaker
**25** USB interface
**26** LAN interface
**27** Sensor
**28** Door locking part
**R** Racks
**R1** to **R7** Rack
**P** Partition plate
**RA** Rack antennas
**RA1** to **RA7** Rack antenna
**AA** Access antenna
**L** Label
**IM1** to **IM6** Item
**UC** User card
**PC** Picking list card

## Claims

1. A storage cabinet (1) for storing a plurality of items (IM1 to IM6), each item including a first tag attached thereto, the first tag being an RF tag for recording item information relating to a corresponding item, the item information including at least an item code identifying an item and information of an expiration date of the item, the storage cabinet (1) comprising:
a housing (2) for storing the plurality of items, a door (3) connected to the housing (2), the door (3) being configured to be in an open state in which the plurality of items is accessible from the outside, or in a closed state in which the plurality of items is inaccessible from the outside;
a first reader (21) configured to read item information recorded in the first tag of all items stored in the housing (2), when the door (3) is in the closed state;
a judgment part configured to judge whether an expired item exists in the housing (2), based on a reading result of the first reader (21); **characterized by**
a first controller (20) configured to control item retrieval from the housing (2) in a first mode if the judgment part judges that an expired item does not exist in the housing (2), the first mode being a mode in which retrieval of an item other than an item having a period of time to an expiration date which is the shortest among items of the identical item code is restricted; and
a second controller (20) configured to control item retrieval from the housing (2) in a mode selected from the first mode and a second mode based on an operation of a user if the judgment part judges that an expired item exists in the housing (2), the second mode being a mode in which retrieval of an item other than an expired item is restricted,
the storage cabinet (1) further comprises a second reader (21) configured to read information recorded in a second tag when the door (3) is in the closed state and the second tag is made proximate from the outside to a predetermined area (10) on the housing (2), the information recorded in the second tag including user identification information identifying a user,
wherein the second controller (20) is configured to:
display a warning message on a display panel (22a) of the storage cabinet (1), if the judgment part has judged that an expired item exists in the housing (2),
when the second reader (21) reads the user identification information within a preset period of time after the warning message is displayed, display a confirmation message on the display panel (22a), otherwise select the first mode,
when the second reader (21) reads the user identification information within a preset period of time after the confirmation message is displayed, select the second mode, otherwise select the first mode.

2. The storage cabinet (1) according to claim 1, further comprising:
the door (3) configured to be openable or closable with respect to the housing (2),
a door locking part (28) configured to lock or unlock the door, and
a third controller (20) configured to control the door locking part (28) so as to unlock the door when authentication of the user identification information read by the second reader (21) is successful.

3. The storage cabinet (1) according to claim 1 or 2, further comprising a first alarm part configured to output at least one of a vocal alarm and a displayed alarm, if the second controller (20) judges:
that the first mode is selected and an item other than an item having a period of time to an expiration date which is the shortest among items of the identical item code has been retrieved from the storage cabinet (1); or
that the second mode is selected and an item other than an expired item has been retrieved from the storage cabinet (1).

4. The storage cabinet (1) according to claim 3, further comprising a transmitter (26) configured to transmit an email to a predetermined address, if the item judged to have been retrieved from the storage cabinet (1) is not returned to the storage cabinet (1).

5. The storage cabinet (1) according to any one of claims 1 to 4, further comprising a second alarm part configured to output at least one of a vocal alarm and a displayed alarm when an item having a remaining period of time to an expiration date which reaches a preset period of time exists among the items stored in the storage cabinet (1).

6. The storage cabinet (1) according to any one of claims 1 to 5, wherein the expiration date of an item is an expiration date of the item itself or a preset period of time before an expiration date of the item itself.

7. The storage cabinet (1) according to any one of claims 1 to 6, wherein the expiration date of an item is a reference time.

## Patentansprüche

1. Lagerschrank (1) zum Lagern einer Vielzahl von Gegenständen (IM1 bis IM6), wobei jeder Gegenstand ein daran angebrachtes erstes Etikett aufweist, wobei das erste Etikett ein RF-Etikett zum Aufzeichnen von Gegenstandsinformationen ist, die sich auf einen entsprechenden Gegenstand beziehen, wobei die Gegenstandsinformationen zumindest einen Gegenstandscode, der einen Gegenstand identifiziert, und Informationen über ein Verfallsdatum des Gegenstands umfassen, wobei der Lagerschrank (1) umfasst:
ein Gehäuse (2) zum Lagern der Vielzahl von Gegenständen, eine Tür (3), die mit dem Gehäuse (2) verbunden ist, wobei die Tür (3) dazu eingerichtet ist, sich in einem geöffneten Zustand, in dem die Vielzahl von Gegenständen von außen zugänglich ist, oder in einem geschlossenen Zustand, in dem die Vielzahl von Gegenständen von außen unzugänglich ist, zu befinden;
eine erste Leseeinrichtung (21), die dazu eingerichtet ist, Gegenstandsinformationen zu lesen, die in dem jeweiligen ersten Etikett aller in dem Gehäuse (2) gelagerten Gegenstände aufgezeichnet sind, wenn sich die Tür (3) in dem geschlossenen Zustand befindet;
eine Beurteilungseinheit, die dazu eingerichtet ist, auf Grundlage eines Leseergebnisses der ersten Leseeinrichtung (21) zu beurteilen, ob ein verfallener Gegenstand in dem Gehäuse (2) vorhanden ist; **dadurch gekennzeichnet, dass** der Lagerschrank (1) umfasst:
eine erste Steuerung (20), die dazu eingerichtet ist, die Entnahme von Gegenständen aus dem Gehäuse (2) in einem ersten Modus zu steuern, wenn die Beurteilungseinheit beurteilt, dass kein verfallener Gegenstand in dem Gehäuse (2) vorhanden ist, wobei der erste Modus ein Modus ist, in dem die Entnahme eines anderen Gegenstands als eines Gegenstands, dessen Zeitspanne bis zu einem Verfallsdatum unter Gegenständen mit identischem Gegenstandscode die kürzeste ist, eingeschränkt ist; und
eine zweite Steuerung (20), die dazu eingerichtet ist, die Entnahme von Gegenständen aus dem Gehäuse (2) in einem Modus zu steuern, der basierend auf einer Bedienhandlung eines Benutzers aus dem ersten Modus und einem zweiten Modus ausgewählt wird, wenn die Beurteilungseinheit beurteilt, dass ein verfallener Gegenstand in dem Gehäuse (2) vorhanden ist, wobei der zweite Modus ein Modus ist, in dem die Entnahme eines anderen Gegenstands als eines verfallenen Gegenstands eingeschränkt ist,
wobei der Lagerschrank (1) ferner eine zweite Leseeinrichtung (21) umfasst, die dazu eingerichtet ist, Informationen zu lesen, die in einem zweiten Etikett aufgezeichnet sind, wenn sich die Tür (3) in dem geschlossenen Zustand befindet und das zweite Etikett von außen in die Nähe eines vorbestimmten Bereichs (10) an dem Gehäuse (2) gebracht wird, wobei die in dem zweiten Etikett aufgezeichneten Informationen Benutzeridentifikationsinformationen umfassen, die einen Benutzer identifizieren,
wobei die zweite Steuerung (20) dazu eingerichtet ist:
eine Warnmeldung auf einem Anzeigefeld (22a) des Lagerschranks (1) anzuzeigen, wenn die Beurteilungseinheit beurteilt hat, dass ein verfallener Gegenstand in dem Gehäuse (2) vorhanden ist,
wenn die zweite Leseeinrichtung (21) die Benutzeridentifikationsinformationen innerhalb einer voreingestellten Zeitspanne nach dem Anzeigen der Warnmeldung liest, eine Bestätigungsmeldung auf dem Anzeigefeld (22a) anzuzeigen, andernfalls den ersten Modus auszuwählen,
wenn die zweite Leseeinrichtung (21) die Benutzeridentifikationsinformationen innerhalb einer voreingestellten Zeitspanne nach dem Anzeigen der Bestätigungsmeldung liest, den zweiten Modus auszuwählen, andernfalls den ersten Modus auszuwählen.

2. Lagerschrank (1) nach Anspruch 1, ferner umfassend:
die Tür (3), die dazu eingerichtet ist, bezüglich des Gehäuses (2) öffenbar oder schließbar zu sein,
eine Türverriegelungseinheit (28), die dazu eingerichtet ist, die Tür zu verriegeln oder zu entriegeln, und
eine dritte Steuerung (20), die dazu eingerichtet ist, die Türverriegelungseinheit (28) so zu steuern, dass die Tür entriegelt wird, wenn eine Authentifizierung der von der zweiten Leseeinrichtung (21) gelesenen Benutzeridentifikationsinformationen erfolgreich ist.

3. Lagerschrank (1) nach Anspruch 1 oder 2, ferner umfassend eine erste Alarmeinheit, die dazu eingerichtet ist, zumindest einen von einem akustischen Alarm und einem angezeigten Alarm auszugeben, wenn die zweite Steuerung (20) beurteilt:
dass der erste Modus ausgewählt ist und ein anderer Gegenstand als ein Gegenstand, dessen Zeitspanne bis zu einem Verfallsdatum unter Gegenständen mit identischem Gegenstandscode die kürzeste ist, aus dem Lagerschrank (1) entnommen worden ist; oder
dass der zweite Modus ausgewählt ist und ein anderer Gegenstand als ein verfallener Gegenstand aus dem Lagerschrank (1) entnommen worden ist.

4. Lagerschrank (1) nach Anspruch 3, ferner umfassend eine Sendeeinrichtung (26), die dazu eingerichtet ist, eine E-Mail an eine vorbestimmte Adresse zu übertragen, wenn der Gegenstand, von dem beurteilt wurde, dass er aus dem Lagerschrank (1) entnommen worden ist, nicht in den Lagerschrank (1) zurückgegeben wird.

5. Lagerschrank (1) nach einem der Ansprüche 1 bis 4, ferner umfassend eine zweite Alarmeinheit, die dazu eingerichtet ist, zumindest einen von einem akustischen Alarm und einem angezeigten Alarm auszugeben, wenn unter den in dem Lagerschrank (1) gelagerten Gegenständen ein Gegenstand vorhanden ist, dessen verbleibende Zeitspanne bis zu einem Verfallsdatum eine voreingestellte Zeitspanne erreicht.

6. Lagerschrank (1) nach einem der Ansprüche 1 bis 5, wobei das Verfallsdatum eines Gegenstands ein Verfallsdatum des Gegenstands selbst oder eine voreingestellte Zeitspanne vor einem Verfallsdatum des Gegenstands selbst ist.

7. Lagerschrank (1) nach einem der Ansprüche 1 bis 6, wobei das Verfallsdatum eines Gegenstands ein Referenzzeitpunkt ist.

## Revendications

1. Armoire de stockage (1) pour stocker une pluralité d'articles (IM1 à IM6), chaque article comprenant une première étiquette fixée à celui-ci, la première étiquette étant une étiquette RF destinée à enregistrer des informations d'article relatives à un article correspondant, les informations d'article comprenant au moins un code d'article identifiant un article et des informations concernant une date d'expiration de l'article, l'armoire de stockage (1) comprenant :
un boîtier (2) pour stocker la pluralité d'articles, une porte (3) reliée au boîtier (2), la porte (3) étant configurée pour être dans un état ouvert dans lequel la pluralité d'articles est accessible depuis l'extérieur, ou dans un état fermé dans lequel la pluralité d'articles est inaccessible depuis l'extérieur ;
un premier lecteur (21) configuré pour lire les informations d'article enregistrées dans la première étiquette de chacun des articles stockés dans le boîtier (2), lorsque la porte (3) est dans l'état fermé ;
une unité de détermination configurée pour déterminer si un article périmé existe dans le boîtier (2), sur la base d'un résultat de lecture du premier lecteur (21) ; **caractérisée en ce que** l'armoire de stockage (1) comprend :
un premier dispositif de commande (20) configuré pour commander le retrait d'articles du boîtier (2) dans un premier mode si l'unité de détermination détermine qu'aucun article périmé n'existe dans le boîtier (2), le premier mode étant un mode dans lequel le retrait d'un article autre qu'un article présentant une durée jusqu'à une date d'expiration qui est la plus courte parmi les articles ayant un code d'article identique est limité ; et
un deuxième dispositif de commande (20) configuré pour commander le retrait d'articles du boîtier (2) dans un mode sélectionné parmi le premier mode et un deuxième mode sur la base d'une opération d'un utilisateur si l'unité de détermination détermine qu'un article périmé existe dans le boîtier (2), le deuxième mode étant un mode dans lequel le retrait d'un article autre qu'un article périmé est limité,
l'armoire de stockage (1) comprend en outre un deuxième lecteur (21) configuré pour lire des informations enregistrées dans une deuxième étiquette lorsque la porte (3) est dans l'état fermé et que la deuxième étiquette est amenée depuis l'extérieur à proximité d'une zone prédéterminée (10) sur le boîtier (2), les informations enregistrées dans la deuxième étiquette comprenant des informations d'identification d'utilisateur identifiant un utilisateur,
le deuxième dispositif de commande (20) étant configuré pour :
afficher un message d'avertissement sur un panneau d'affichage (22a) de l'armoire de stockage (1), si l'unité de détermination a déterminé qu'un article périmé existe dans le boîtier (2),
lorsque le deuxième lecteur (21) lit les informations d'identification d'utilisateur pendant une période de temps prédéfinie suivant l'affichage du message d'avertissement, afficher un message de confirmation sur le panneau d'affichage (22a), sinon sélectionner le premier mode,
lorsque le deuxième lecteur (21) lit les informations d'identification d'utilisateur pendant une période de temps prédéfinie suivant l'affichage du message de confirmation, sélectionner le deuxième mode, sinon sélectionner le premier mode.

2. Armoire de stockage (1) selon la revendication 1, comprenant en outre :
la porte (3) configurée pour pouvoir être ouverte ou fermée par rapport au boîtier (2),
une unité de verrouillage de porte (28) configurée pour verrouiller ou déverrouiller la porte, et
un troisième dispositif de commande (20) configuré pour commander l'unité de verrouillage de porte (28) de manière à déverrouiller la porte lorsque l'authentification des informations d'identification d'utilisateur lues par le deuxième lecteur (21) réussit.

3. Armoire de stockage (1) selon la revendication 1 ou 2, comprenant en outre une première unité d'alarme configurée pour émettre au moins une alarme parmi une alarme sonore et une alarme affichée, si le deuxième dispositif de commande (20) détermine :
que le premier mode est sélectionné et qu'un article autre qu'un article présentant une durée jusqu'à une date d'expiration qui est la plus courte parmi les articles ayant un code d'article identique a été retiré de l'armoire de stockage (1) ; ou
que le deuxième mode est sélectionné et qu'un article autre qu'un article périmé a été retiré de l'armoire de stockage (1).

4. Armoire de stockage (1) selon la revendication 3, comprenant en outre un émetteur (26) configuré pour transmettre un courriel à une adresse prédéterminée, si l'article dont il a été déterminé qu'il avait été retiré de l'armoire de stockage (1) n'est pas retourné dans l'armoire de stockage (1).

5. Armoire de stockage (1) selon l'une quelconque des revendications 1 à 4, comprenant en outre une deuxième unité d'alarme configurée pour émettre au moins une alarme parmi une alarme sonore et une alarme affichée lorsqu'un article présentant une durée restante jusqu'à une date d'expiration qui atteint une durée prédéfinie existe parmi les articles stockés dans l'armoire de stockage (1).

6. Armoire de stockage (1) selon l'une quelconque des revendications 1 à 5, dans laquelle la date d'expiration d'un article est une date d'expiration de l'article lui-même ou une durée prédéfinie avant une date d'expiration de l'article lui-même.

7. Armoire de stockage (1) selon l'une quelconque des revendications 1 à 6, dans laquelle la date d'expiration d'un article est un instant de référence.
